# EUROPEAN PATENT SPECIFICATION

(11) **EP 1 767 404 B1**
(45) Date of publication and mention of the grant of the patent: **02.04.2008**
(21) Application number: 05360031.8
(22) Date of filing: 21.09.2005
(51) Int. Cl.: B60R 1/078

(54) **Auxiliary rearview mirror mounting arrangement**
Montageanordnung für zusätzlichen Rückblickspiegel
Dispositif de support auxiliaire pour rétroviseur

(43) Date of publication of application: 28.03.2007
(73) Proprietor: Hu, Tsai-Fu, Yung Kang Tainan County (TW)
(72) Inventor: Hu, Tsai-Fu, Yung Kang Tainan County (TW)
(74) Representative: Metz, Paul

(56) References cited:
- DE-U1- 9 000 393
- DE-U1- 20 107 944
- US-A- 4 892 400
- US-A- 5 724 199

## Description

### BACKGROUND OF THE INVENTION

### 1. Field of the Invention

The present invention relates to the mounting of an auxiliary rearview mirror and more particularly, to an auxiliary rearview mirror mounting arrangement, which uses two fasteners to adjustably secure an auxiliary rearview mirror to a vehicle rearview mirror.

### 2. Description of the Related Art

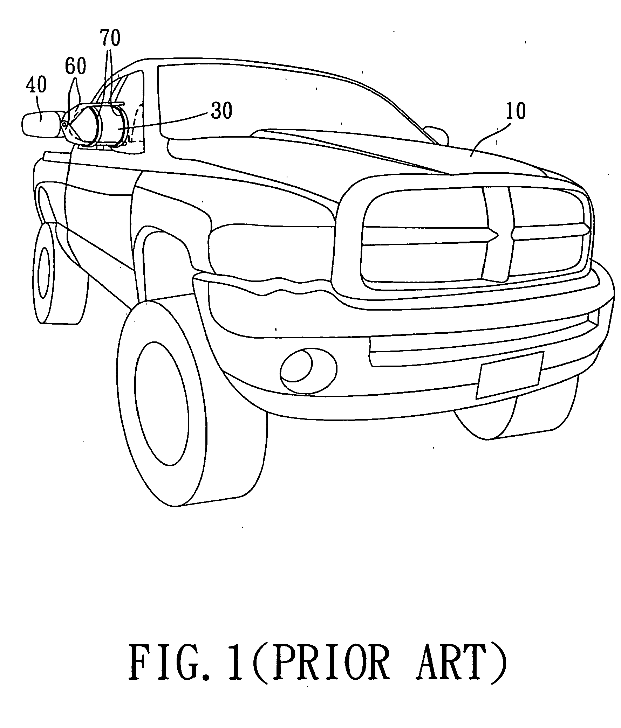

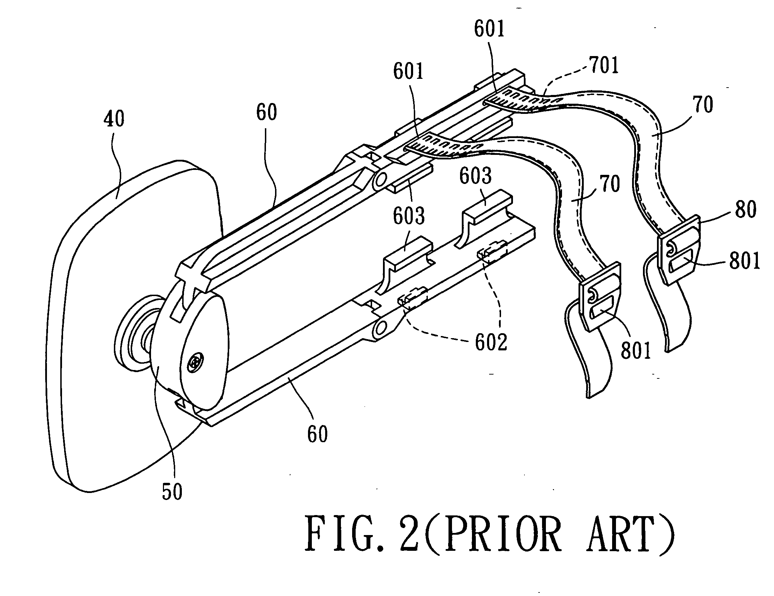

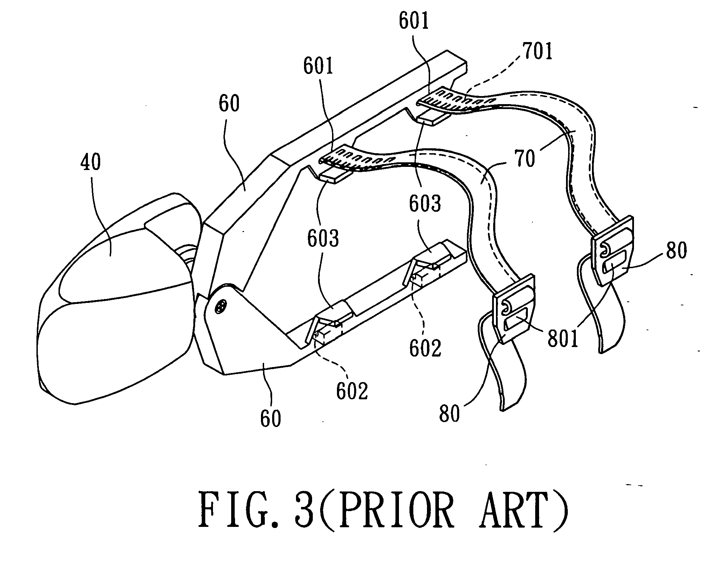

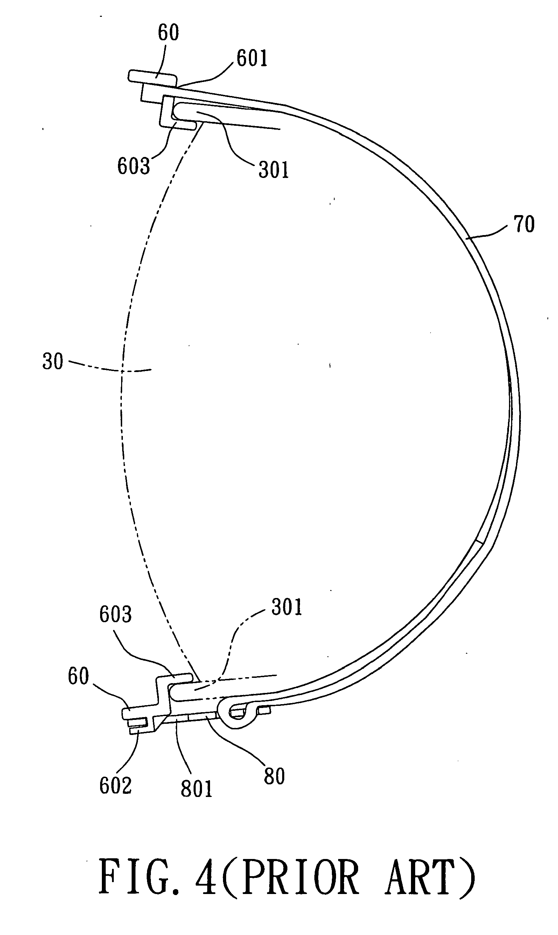

FIG. 1 shows an auxiliary rearview mirror **40** fastened to the vehicle rearview mirror **30** of a motor vehicle **10.** Referring to FIG. 2 and FIG. 1 again, the auxiliary rearview mirror **40** has a connector **50** provided at the back side, two support arms **60** respectively pivoted to the connector **50,** and two fastening straps **70** that secure the support arms **60** to the vehicle rearview mirror **30**(see FIG. 4). Alternatively, the aforesaid connector **50** can be eliminated, and the support arms **60** can be directly pivoted to the auxiliary rearview mirror **40** (see FIG. 3). The fastening straps **70** each have a retaining portion **701** disposed at one end and fastened to a respective mounting hole **601** at one support arm **60** (see FIG. 2 and FIG. 3), and a strap fitting **801** adjustably provided at the other end and fastened to a respective hook **602** at the other support arm **60.** Further, each support arm **60** is provided with substantially L-shaped retaining frames **603** for hooking on the rim **301** of the vehicle rearview mirror **30(see** FIG. 4). According to this design, the L-shaped retaining frames **603** have a fixed height and fit only one particular model of vehicle rearview mirror that has a predetermined thickness of rim. If the thickness of the rim **301** of the vehicle rearview mirror **30** does not fit the height of the L-shaped retaining frames **603,** the auxiliary rearview mirror **40** may vibrate relative to or fall from the vehicle rearview mirror **30** during running of the motor vehicle **10.**

To solve this technical problem, another solution was imagined in prior art.

US-A-5 724 199 discloses an adjustable auxiliary rear-view mirror mounting structure including two inner arms fastened to two opposite sides of the rear-view mirror of a motor vehicle, two outer arms pivoted to the inner arms to hold a lamp socket and mirror assembly, and, binding means connected between the inner arms, wherein the inner arms have a respective toothed wall portion horizontally disposed at one end and a screw hole at the center of the toothed wall portion thereof ; the outer arms have a respective toothed wall portion vertically disposed at one end and a screw hole at the center of the toothed wall portion thereof ; each of the connectors has a toothed horizontal coupling section at one end detachably meshed with the toothed wall portion of one inner arm, a first through hole at the center of the toothed horizontal coupling section and fixed to the screw hole of the second end of one inner arm at the desired angle by a first screw and a first nut, a toothed vertical coupling section at an opposite end detachably meshed with the toothed wall portion of one outer arm, a second through hole at the center of said toothed vertical coupling section and fixed to the screw hole of the first end of one outer arm at the desired angle by a second screw and a second nut, each of the first screw and the second screw being coupled with a respective cap adapted for turning by hand.

This prior art structure uses a pair of binding devices which are long and fastidious to use, because they require to turn a screw by a cup for tightening up the tie strap or loosening it.

### SUMMARY OF THE INVENTION

The present invention has been accomplished under the circumstances in view.

It is therefore the main object of the present invention to provide an auxiliary rearview mirror mounting arrangement, which secures firmly the auxiliary rearview mirror to the vehicle rearview mirror against vibration.

It is another object of the present invention to provide an auxiliary rearview mirror mounting arrangement, which fits any of a variety of vehicle rearview mirrors.

To achieve these and other objects of the present invention, the auxiliary rearview mirror mounting arrangement comprises an auxiliary rearview mirror, which has at least one support arm, at least one fastener for fastening the auxiliary rearview mirror to a vehicle rearview mirror. Each fastener comprises a first strap that has a first end and a second end, a second strap that has a first end and a second end, a first connecting member and a second connecting member respectively provided at the first end of the first strap and the first end of the second strap for securing the first strap and the second strap to the at least one support arm of the auxiliary rearview mirror, and a slidably mounted clip coupled to the second end of the second strap and adjustably clamped on the second end of the first strap to join the second end of the first strap and the second end of the second strap.

The connecting members of each fastener can be hooks or hook holes, and each support arm of the auxiliary rearview mirror has hook holes or hooks for receiving the connecting members.

Further, the first strap has a plurality of transverse teeth arranged along the length thereof and sloping in one direction; the clip of each fastener comprises a base frame, which has two front lugs and two rear lugs arranged at two sides, an actuating block, which is pivotally connected between the front lugs and has a front push end for pushing the transverse teeth of first strap forward upon insertion of the second end of the first strap into the clip, an engagement block pivotally connected between the rear lugs for engaging the transverse teeth of the strap to lock the first strap to the clip, and two torsional springs respectively coupled between the base frame and the actuating block and between the base frame and the engagement block to impart a biasing force to the actuating block and the engagement block respectively.

Further, each support arm of the auxiliary rearview mirror comprises at least one horizontal front insertion hole, at least one vertical rear insertion hole corresponding to the at least one horizontal front insertion holes, at least one vertical sliding track respectively upwardly disposed adjacent to the at least one vertical rear insertion hole, and at least one flexible connecting member for securing the straps of each fastener to each support arm of the auxiliary rearview mirror. The at least one flexible connecting member each has a rear end respectively slidably coupled to the at least one vertical sliding track and a front end respectively inserted through the at least one vertical rear insertion hole and then the at least one horizontal front insertion hole of the at least one support arm, and a hook at the rear end for hooking on the rim of the vehicle rearview mirror.

### BRIEF DESCRIPTION OF THE DRAWINGS

FIG. 1 illustrates an auxiliary rearview mirror installed in a vehicle rearview mirror on a motor vehicle according to the prior art.
FIG. 2 is an elevational view of an auxiliary rearview mirror mounting structure according to the prior art.
FIG. 3 is an elevational view of another design of auxiliary rearview mirror mounting structure according to the prior art.
FIG. 4 is a schematic drawing showing the prior art auxiliary rearview mirror mounting structure installed in a vehicle rearview mirror.
FIG. 5 is an exploded view of an auxiliary rearview mirror mounting structure according to the present invention.
FIG. 5A corresponds to a part of FIG. 5, showing an alternate form of the connection between the connecting member at one strap of the fastener and the connecting member at the support arm.
FIG. 6 is substantially similar to FIG. 5 but showing an alternate form of the support arms.
FIG. 6A corresponds to a part of FIG. 6, showing an alternate form of the connection between the connecting member at one strap of the fastener and the connecting member at the support arm.
FIG. 7 is an exploded view showing still another alternate form of the support arms of the auxiliary rearview according the present invention.
FIG. 8 is a sectional assembly view of the fastener according to the present invention.
FIG. 9 is a schematic drawing showing the operation of the clip of the fastener according to the present invention (I).
FIG. 10 is a schematic drawing showing the operation of the clip of the fastener according to the present invention (II).
FIG. 11 is a schematic drawing showing the operation of the clip of the fastener according to the present invention (III).
FIG. 12 is a schematic drawing showing an installation example of the present invention.
FIG. 13 is a schematic drawing showing another installation example of the present invention. FIG. 13A is an enlarged view of a part of FIG. 13.
FIG. 14 is a schematic drawing showing still another installation example of the present invention.
FIG. 15 is an exploded view showing the use of the fastener with still another structure of auxiliary rearview mirror according to the present invention.
FIG. 16 is an exploded view showing the use of the fastener with still another structure of auxiliary rearview mirror according to the present invention.
FIG. 17 is an exploded view showing the use of the fastener with still another structure of auxiliary rearview mirror according to the present invention.
FIG. 17A is an exploded view showing still another alternate form of the connection between the straps of the fastener and the support arm of the auxiliary rearview mirror according to the present invention.
FIG. 17B is an exploded view showing still another alternate form of the connection between the straps of the fastener and the support arm of the auxiliary rearview mirror according to the present invention.
FIG. 18 is an exploded view showing the use of the fastener with still another structure of auxiliary rearview mirror according to the present invention.
FIG. 18A corresponds to a part of FIG. 18 but showing an alternate form of the connection between one strap of the fastener and one support arm of the auxiliary rearview mirror.
FIG. 19 is an exploded view showing still another alternate of the vehicle rearview mirror and auxiliary rearview mirror according to the present invention.
FIG. 20 is a schematic side assembly view of the assembly shown in FIG. 19.

### DETAILED DESCRIPTION OF THE PREFERRED EMBODIMENTS

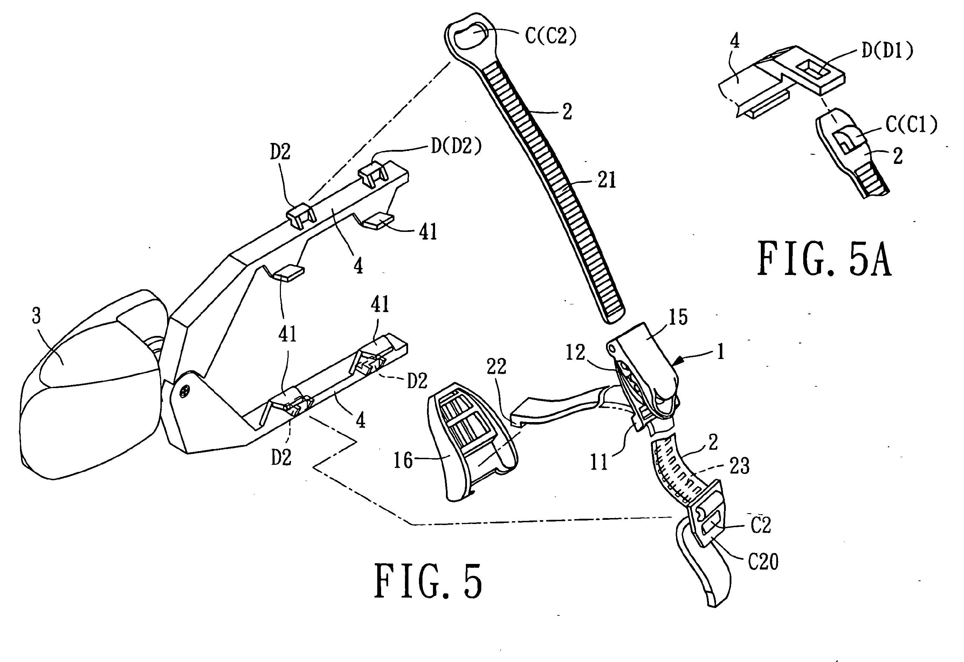

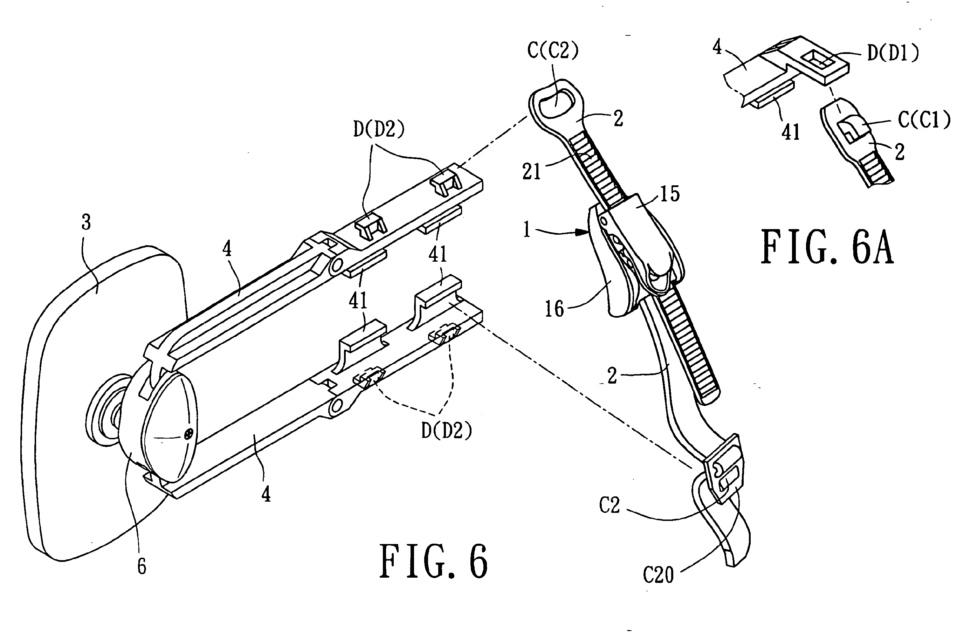

Referring to FIGS. 5 and 6, a fastener for fastening an auxiliary rearview mirror to a vehicle rearview mirror in accordance with the present invention is shown comprised of a slidable clamping clip **1** and two straps **2.**

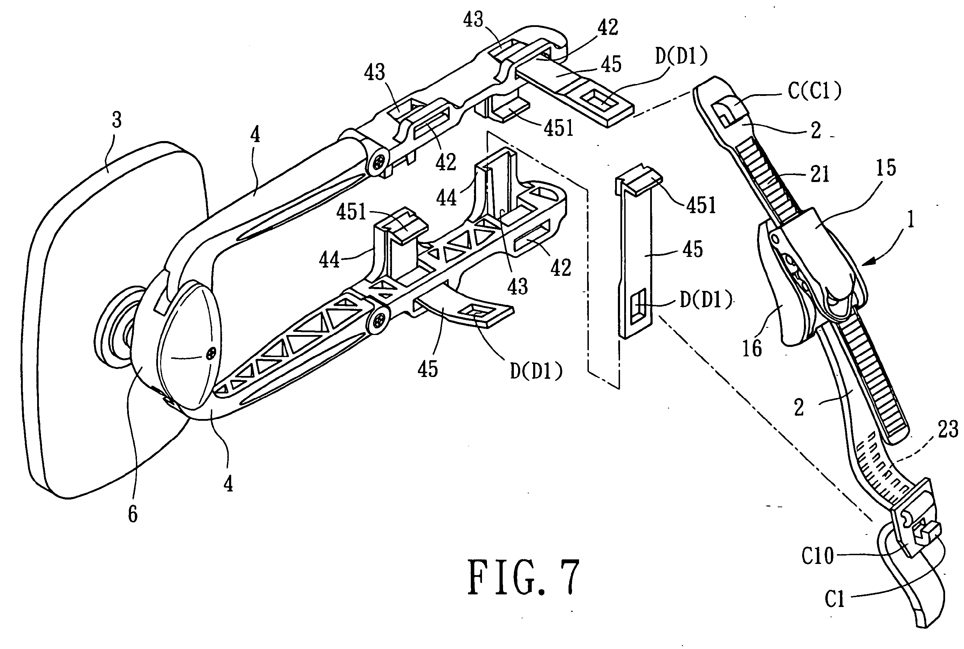

The clip **1** has a locating ring **11.** The straps **2** have a connecting member **C** at one end. The connecting member **C** can be a hook **C1** (see FIGS. 5A and 6A), or hook hole **C2** (see FIG. 5). The hook **C1** may be formed integral with a strap fitting **C10** at one strap **2** (see FIG. 7). The hook hole **C2** may be formed on a strap fitting **C20** at one strap **2** (see FIGS. 5 and 6). One of the straps **2** has transverse teeth **21** arranged on the top wall along the length and sloping in one direction. The other of the straps **2** has a retaining endpiece **22** and anti-slip ribs **23** on the respective bottom wall (see FIG. 5). The strap **2** that has the retaining endpiece **22** is inserted through the locating ring **11** of the clip **1** with the retaining endpiece **22** stopped at the locating ring **11.** The clip **1** is axially slidably mounted on the strap **2** that has the transverse teeth **21,** and clamped on the transverse teeth **21** at the desired location. When unfastening the clip **1,** the user can move the strap **2** that has the transverse teeth **21** relative to the clip **1** to adjust the combined length of the straps **2.**

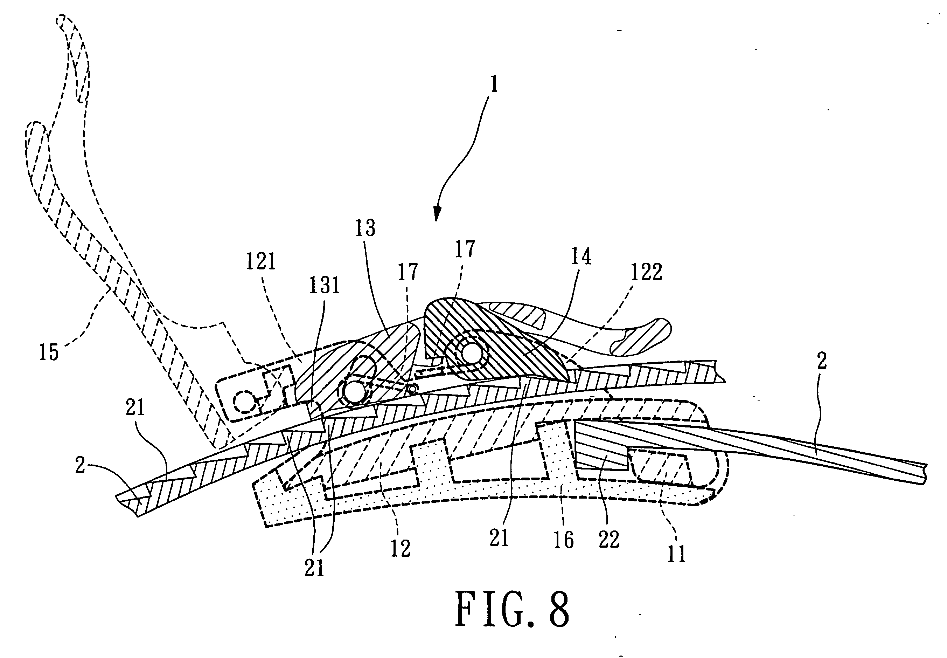

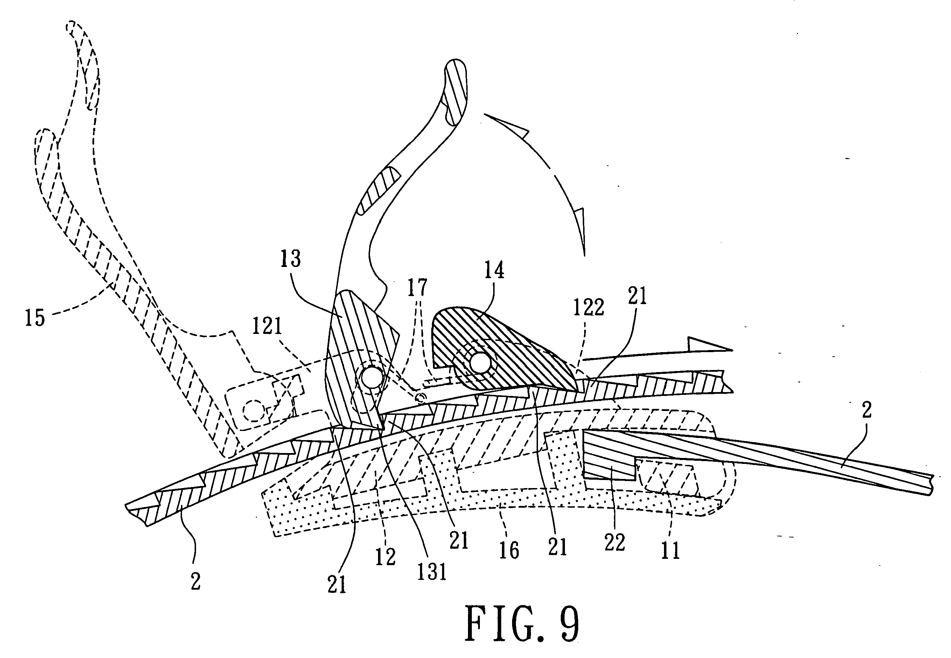

Referring to FIGS. 8 and 9, the clip **1** comprises a base frame **12,** which has two front lugs **121** and two rear lugs **122** arranged at two sides, an actuating block **13,** which is pivotally connected between the front lugs **121** and has a front push end **131,** an engagement block **14** pivotally connected between the rear lugs **122,** a cover **15** pivoted to the front lugs **121** and adapted to cover the actuating block **13** and the engagement block **14,** a cushion block **16** fastened to the bottom side of the base frame **12,** and two torsional springs **17** respectively coupled between the base frame **12** and the actuating block **13** and between the base frame **12** and the engagement block **14.** The aforesaid locating ring **11** is formed integral with one end of the base frame **12.**

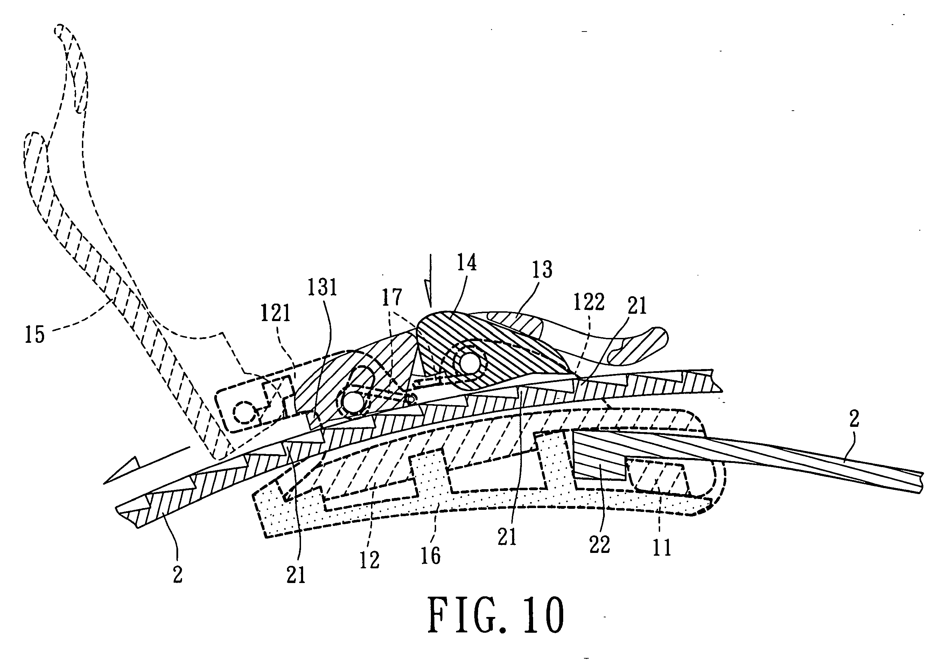

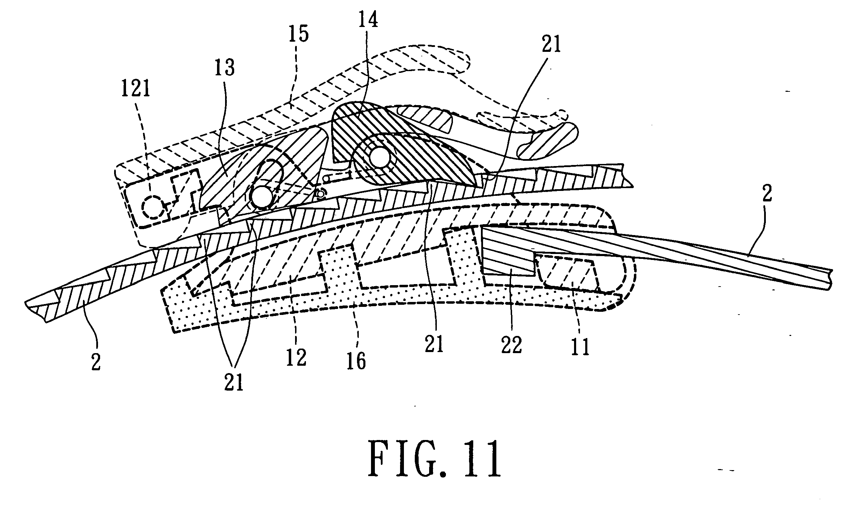

Referring to FIGS. 9∼11, when the strap **2** that has the transverse teeth **21** is inserted through the gap between the base frame **12** and the actuating block **13** and engagement block **14,** the actuating block **13** and the cover **15** are turned relative to the base frame **12** in one direction, and the front push end **131** of the actuating block **13** allows the transverse teeth **21** to pass (see FIG. 9). When the inserting force is disappeared, the engagement block **14** is stopped against one transverse tooth **21** of the respective strap **2** to prohibit backward movement of the respective strap **2** relative to the clip **1** (see FIG. 8). Before lifting the actuating block **13** and pressing the engagement block **14,** the user can pull the strap **2** out of the clip (see FIG. 10). Further, when the cover **15** is closed, it blocks the engagement block **14** (see FIG. 11), preventing the engagement block **14** from be forced by an external pressure accidentally to disengage the strap **2.**

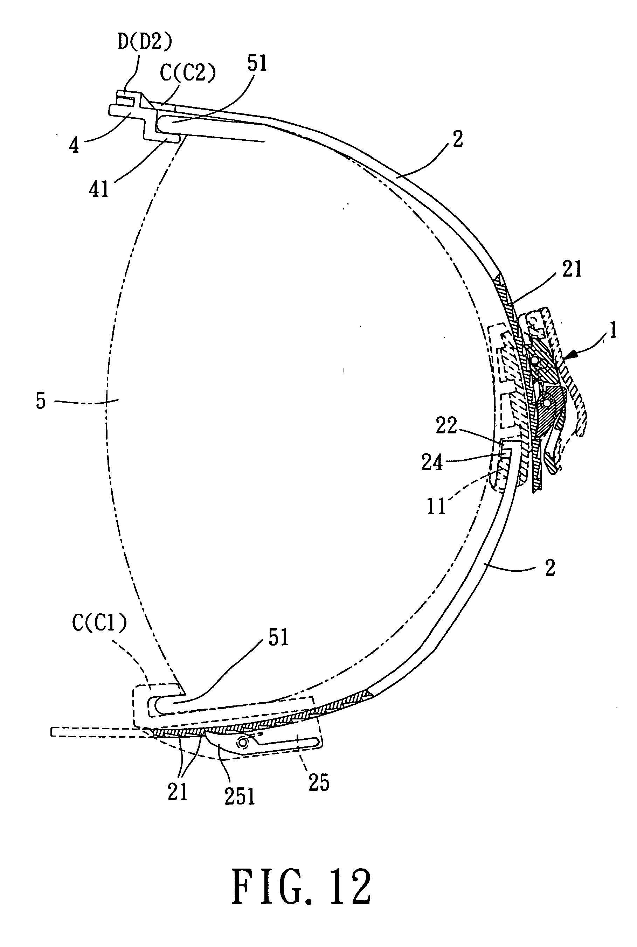

Further, the strap **2** that has the transverse teeth **21** is made of a hard material, for example; engineering plastics. The other strap **2** is made of a flexible material, for example, rubber. Alternatively, both straps **2** can be made of engineering plastics. In this case, the retaining endpiece **22** is covered with a flexible cap **24** (seed FIG. 12) that is compressible during mounting of the fastener.

According to the embodiment shown in FIG. 12, the strap **2** having the said retaining endpiece **22** also has transverse teeth **21** arranged on the top wall along the length and sloping in one direction, and the respective connecting member **C** (hook **C1** or hook hole **C2)** is formed integral with a slide **25,** which is coupled to the respective strap **2** and has a spring-supported locking lever **251** for engaging the transverse teeth **21** to lock the slide **25** to the respective strap **2** at the desired location.

Further, the auxiliary rearview mirror **3** comprises a swivel connector **6** rotatably provided at the back side, and two support arms **4** pivotally connected to the swivel connector **6** (see FIGS.6). Each support arm **4** has connecting members **D,** for example, hook holes **D1** (see FIGS. 5A and 6A) or hooks **D2** (see FIGS. 5 and 6) for the connection of the connecting members **C** (hooks **C1** or hook holes **C2)** of the straps **2** of the respective fasteners, and L-shaped hooking lugs **41.**

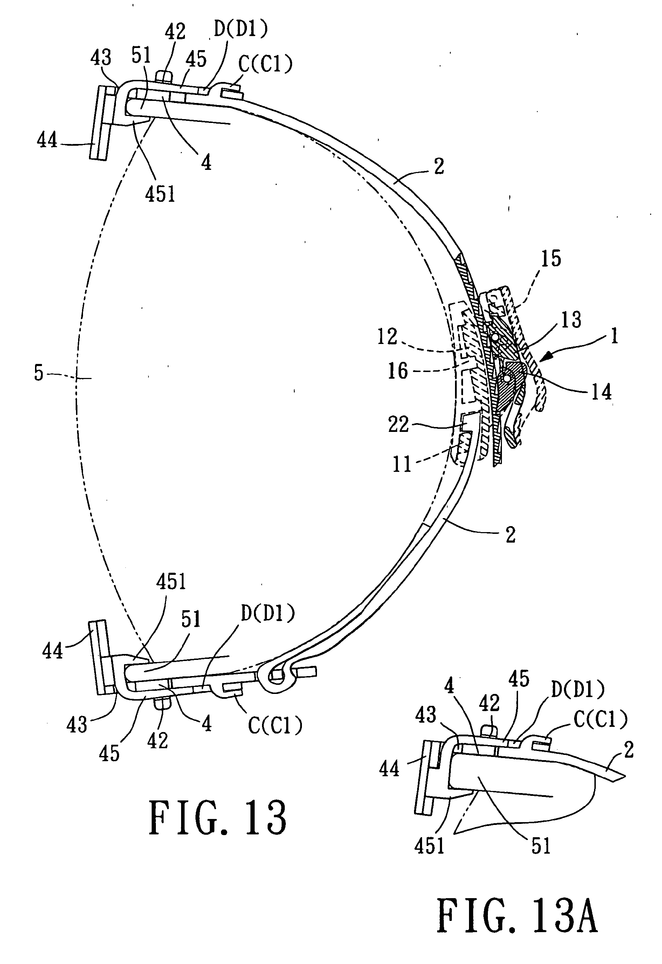

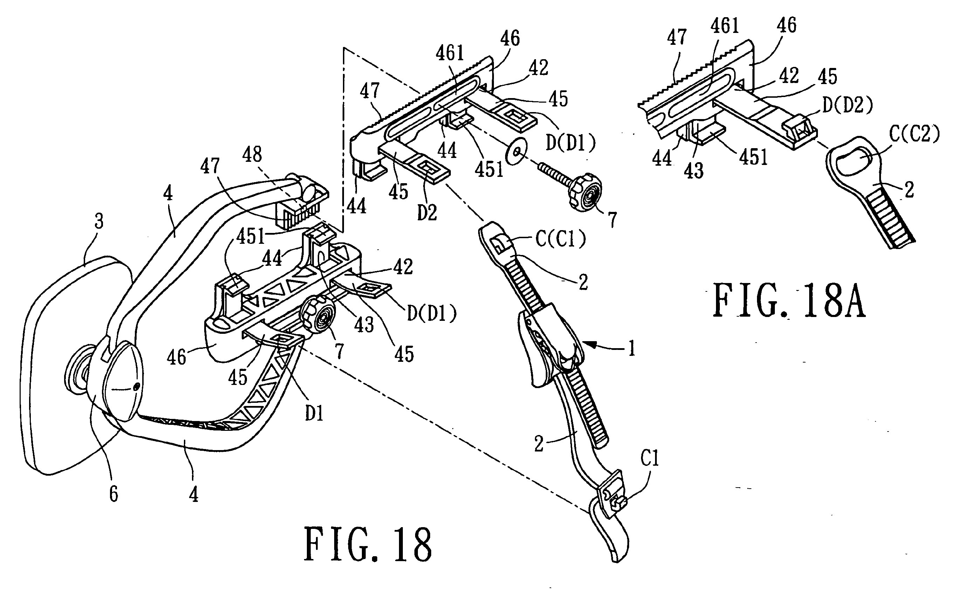

The support arms **4** each further have two horizontal front insertion holes **42,** two vertical rear insertion holes **43** corresponding to the horizontal front insertion holes **42,** two vertical sliding tracks **44** respectively upwardly disposed adjacent to the vertical rear insertion holes **43.** Further, two flexible connecting members **45** are provided for securing the straps **2** of two fasteners to the support arms **4.** The vertical sliding tracks **44** can be a dovetail track or the like. The flexible connecting members **45** each have one end, namely, the rear end respectively slidably coupled to the vertical sliding tracks **44** and the other end, namely, the front end respectively inserted through the vertical rear insertion holes **43** and then the horizontal front insertion holes **42** of the respective support arms **44.** Further, each flexible connecting member **45** has a hook **451** at the rear end for hooking on the rim **51** of the vehicle rearview mirror **5** (see FIG. 13) and a retaining portion **D**, for example, a hook hole **D1** (see FIG. 7) or hook **D2** (see FIG. 18A) at the front end for receiving the respective straps **2** of the respective fasteners. The flexible connecting members **45** can be moved relative to the vertical sliding tracks **44** to fit the thickness of the rim **51** of the vehicle rearview mirror **5** (see FIGS. 13 and 13A).

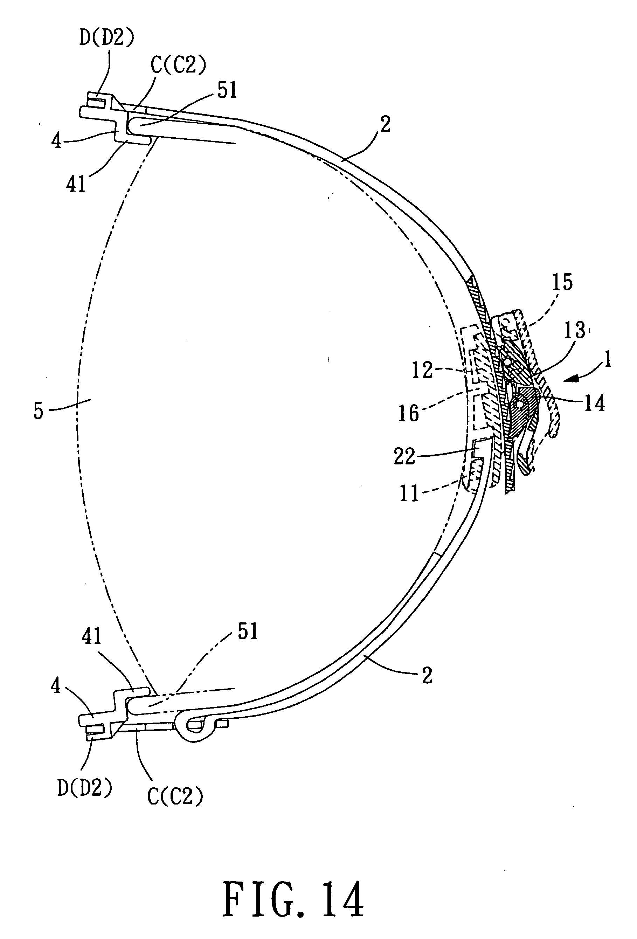

During installation, the hooks **C1** or hook holes **C2** of the straps **2** are respectively fastened to the hook holes **D1** (see FIGS. 5A and 6A) or hooks **D2** (see FIGS. 5 and 6) of the flexible connecting members **45,** and the L-shaped hooking lugs **41** are hooked on the rim **51** of the vehicle rearview mirror **5** (see FIG. 14). By means of repeatedly operating the actuating block **13** of the clip **1** of each fastener, the combined length of the straps **2** of each fastener is shortened (see FIG. 9) to fit the size of the vehicle rearview mirror **5** so that the auxiliary rearview mirror **3** is positively secured to the vehicle rearview mirror **5** and will not vibrate during movement of the motor vehicle. When fastening up the fasteners, the engagement block **14** of the clip **1** of each fastener engages one transverse tooth **21** to lock the respective strap **2** (see FIGS. 8 and 11), and the fasteners impart a pull force to the flexible connecting members **45,** thereby enhancing the engagement between the hooks **451** and the rim **51** of the vehicle rearview mirror **5.** When pressed the front end of the engagement block **14** of the clip **1,** the clip **1** is disengaged from the respective strap **2** (see FIG. 10), and the respective fastener is loosened.

During installation of the auxiliary rearview mirror **3** of which each support arm **4** is equipped with flexible connecting members **45,** the user can operate the actuating block **13** of the clip **1** of each fastener to adjust the combined length of the respective straps **2** and at the same time to move the respective flexible connecting members **45** relative to the respective vertical sliding tracks **44** so as to fit the thickness of the rim **51** of the vehicle rearview mirror **5** (see FIGS. 13 and 13A).

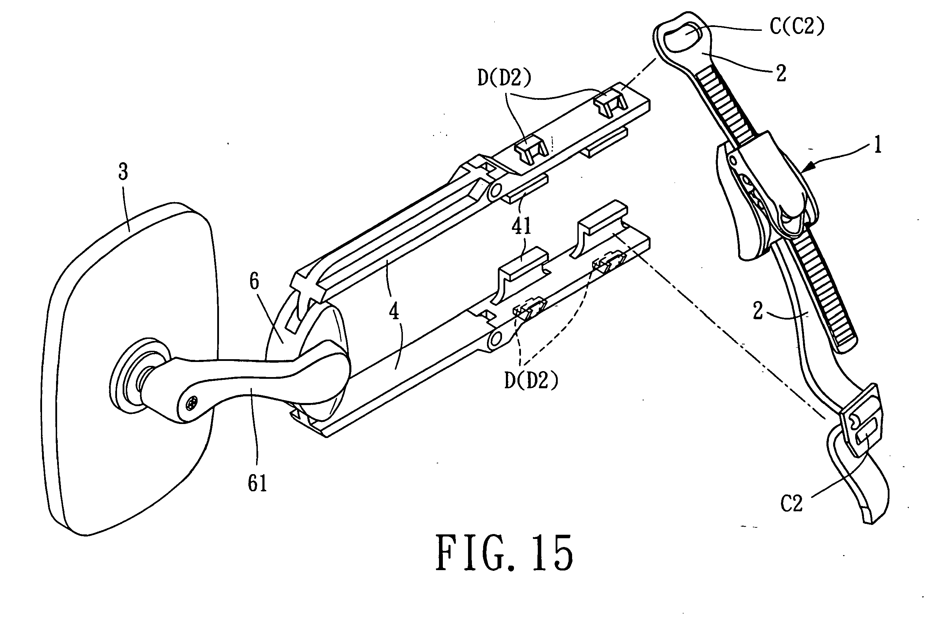

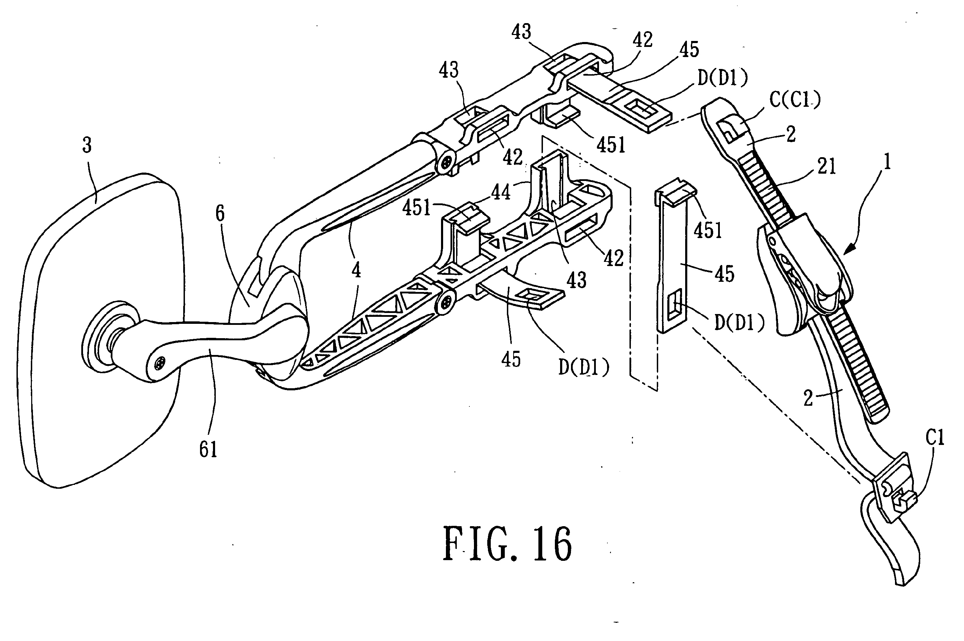

The embodiment shown in FIG. 15 is substantially similar to the embodiment shown in FIGS. 5 and 6 with the exception that the a connecting bar **61** is pivotally connected between the auxiliary rearview mirror **3** and the swivel connector **6** to extend the length of the whole assembly of the auxiliary rearview mirror **3.** The embodiment shown in FIG. 16 is substantially similar to the embodiment shown in FIG. 7 with the exception that the a connecting bar **61** is pivotally connected between the auxiliary rearview mirror **3** and the swivel connector **6** to extend the length of the whole assembly of the auxiliary rearview mirror **3.**

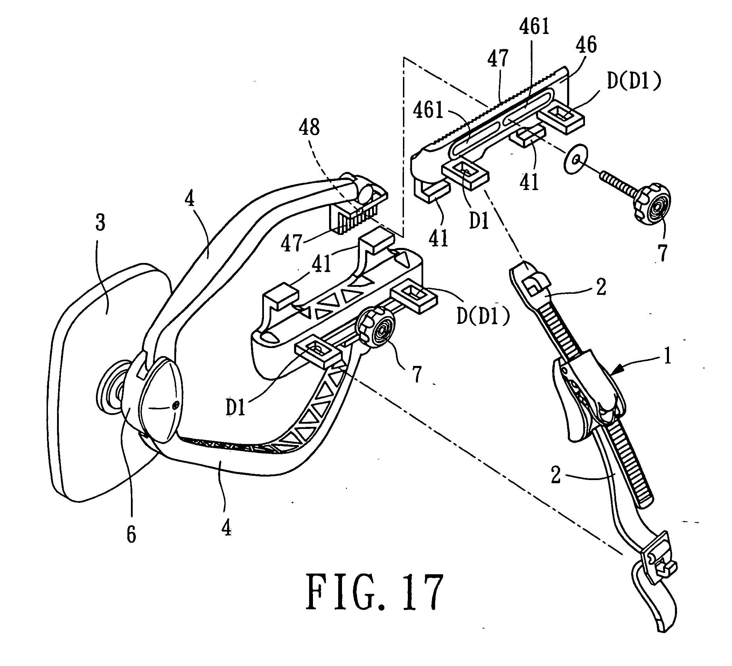

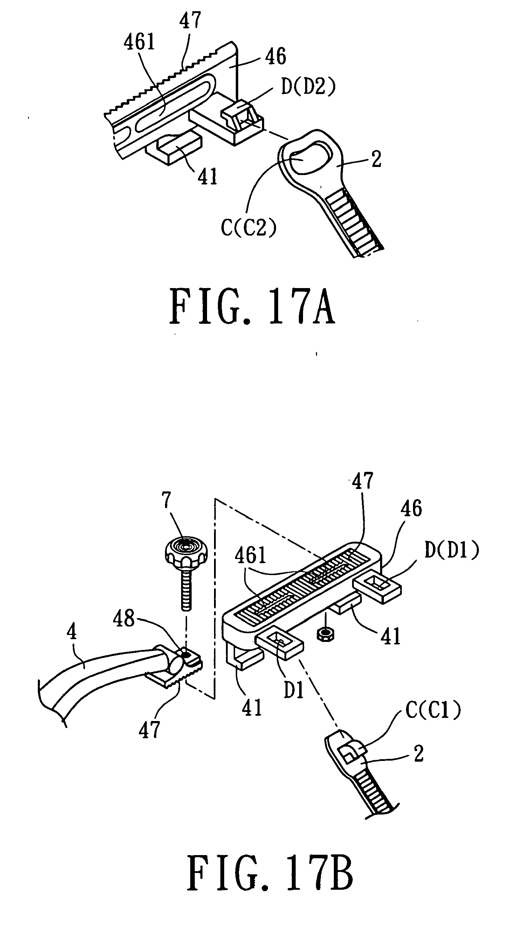

Referring to FIG. 17, two narrow elongated adjustable holder blocks **46** are respectively adjustably fastened to the support arms **4** and locked thereto by a respective lock screw **7.** The lock screw **7** is inserted through an elongated sliding slot **461** at one holder block **46** and threaded into a screw hole **48** at one support arm **4** to affix the respective holder block **46** to the respective support arm **4.** Further, toothed portions **47** are respectively provided at the free end of each support arm **4** and the back side of each holder block **46** for engagement. By means of adjusting the position of the holder blocks **46** relative to the support arms **4,** the total length of the auxiliary rearview mirror is relatively adjusted to fit the size of the vehicle rearview mirror **5.**

FIG. 17B is substantially similar to the embodiment shown in FIG. 7 with the exception of the location of the screw hole **48** at each support arm **4.**

FIGS. 18 and 18A are substantially similar to FIGS. 17 and 17A with the exception that each holder block **46** has vertical sliding tracks **44** respectively mounted with a respective flexible connecting members **45.**

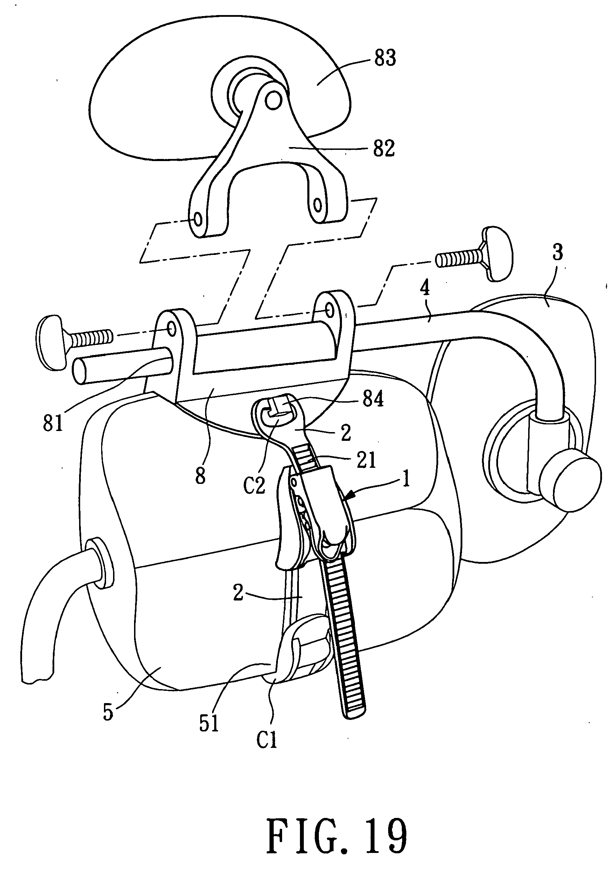

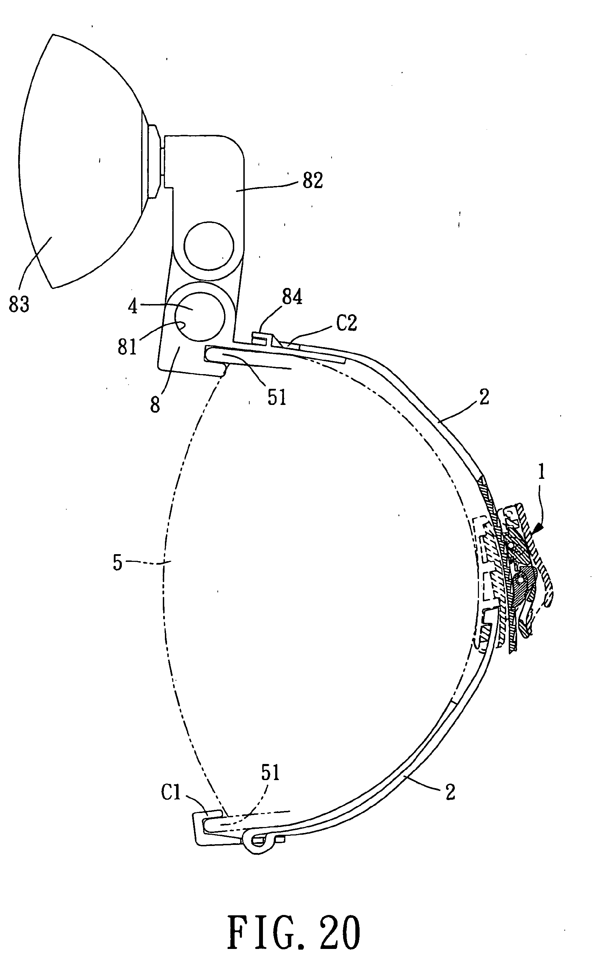

According to the embodiment shown in FIGS. 19 and 20, the auxiliary rearview mirror **3** has only one support arm **4;** the vehicle rearview mirror **5** has a mount **8.** The mount **8** has a mounting through hole **81,** which receives the support arm **4.** A wide-angle lens **83** is provided having a back support **82** fastened to the mount **8.**

## Claims

1. An auxiliary rearview mirror mounting arrangement comprising an auxiliary rearview mirror **(3),** said auxiliary rearview mirror **(3)** comprising at least one support arm **(4),** at least one fastener for fastening said auxiliary rearview mirror **(3)** to a vehicle rearview mirror **(5),** wherein said at least one fastener each comprises
a first strap **(2),** said first strap **(2)** having a first end and a second end, and having a plurality of transverse teeth **(21)** arranged along the length thereof and sloping in one direction;
a second strap **(2),** said second strap **(2)** having a first end and a second end;
a first connecting member **(C)** and a second connecting member **(C)** respectively provided at the first end of said first strap **(2)** and the first end of said second strap **(2)** for securing said first strap **(2)** and said second strap **(2)** to said at least one support arm **(4)** of said auxiliary rearview mirror **(3);** and
a slidable clamping clip **(1)** coupled to the second end of said second strap **(2)** and adjustably clamped on the second end of said first strap **(2)** to join the second end of said first strap **(2)** and the second end of said second strap **(2),**
**characterised in that** said slidable clamping clip **(1)** of each said fastener comprises a base frame **(12),** which has two front lugs **(121)** and two rear lugs **(122)** arranged at two sides, an actuating block **(13),** which is pivotally connected between said front lugs **(121)** and has a front push end **(131)** for pushing the transverse teeth **(21)** of first strap **(2)** forward upon insertion of the second end of said first strap **(2)** into said slidable clamping clip **(1)**, an engagement block **(14)** pivotally connected between said rear lugs **(122)** for engaging the transverse teeth **(21)** of said strap **(2)** to lock said first strap **(2)** to said slidable clamping clip **(1),** and two torsional springs **(17)** respectively coupled between said base frame **(12)** and said actuating block **(13)** and between said base frame **(12)** and said engagement block **(14)** to impart a biasing force to said actuating block **(13)** and said engagement block **(14)** respectively.

2. The auxiliary rearview mirror mounting arrangement as claimed in claim 1, wherein said connecting members **(C)** of said at least one fastener are hooks **(C1).**

3. The auxiliary rearview mirror mounting arrangement as claimed in claim 1, wherein said connecting members **(C)** of said at least one fastener are hook holes **(C2).**

4. The auxiliary rearview mirror mounting arrangement as claimed in claim 2, wherein said at least one support arm **(4)** of said auxiliary rearview mirror **(3)** each has a plurality of hook holes **(D1)** for the connection of the hooks **(C1)** of said connecting members **(C)** of said at least one fastener.

5. The auxiliary rearview mirror mounting arrangement as claimed in claim 3, wherein said at least one support arm **(4)** of said auxiliary rearview mirror **(3)** each has a plurality of hooks **(D2)** for the connection of the hook holes **(C2)** of said connecting members **(C)** of said at least one fastener.

6. The auxiliary rearview mirror mounting arrangement as claimed in claim 1, wherein said slidable clamping clip **(1)** further comprises a cover **(15)** pivoted to the said front lugs **(121)** for covering said engagement block **(14).**

7. The auxiliary rearview mirror mounting arrangement as claimed in claim 1, wherein said slidable clamping clip **(1)** further comprises a cushion block **(16)** fastened to a bottom side of said base frame **(12).**

8. The auxiliary rearview mirror mounting arrangement as claimed in claim 1, wherein said first strap **(2)** is molded from engineering plastics, and said second strap **(2)** is molded of rubber.

9. The auxiliary rearview mirror mounting arrangement as claimed in claim 8, wherein said slidable clamping clip **(1)** comprises a locating ring **(11);** said first strap **(2)** and said second strap **(2)** are respectively molded from engineering plastics; the second end of said second strap **(2)** is inserted through the locating ring **(11)** of said slidable clamping clip **(1)** and terminating in a flexible endpiece **(22)** that is stopped at one side of said locating ring **(11).**

10. The auxiliary rearview mirror mounting arrangement as claimed in claim 9, wherein said first strap **(2)** and said second strap **(2)** each comprise a plurality of transverse teeth **(21)** arranged along the length thereof and sloping in one direction; said second strap **(2)** has a slide **(25)** coupled to the first end thereof, said slide **(25)** having a spring-supported locking lever **(251)** for engaging the transverse teeth **(21)** to lock the slide **(25)** to the respective strap **(2)** at the desired location; said second connecting member **(C)** is formed on said slide **(25).**

11. The auxiliary rearview mirror mounting arrangement as claimed in claim 1, wherein said at least one support arm **(4)** of said auxiliary rearview mirror **(3)** each comprises at least one L-shaped hooking lug **(41).**

12. The auxiliary rearview mirror mounting arrangement as claimed in claim 1, wherein said at least one support arm **(4)** of said auxiliary rearview mirror **(3)** each comprises at least one horizontal front insertion hole **(42),** at least one vertical rear insertion hole **(43)** corresponding to said at least one horizontal front insertion holes **(42),** at least one vertical sliding track **(44)** respectively upwardly disposed adjacent to said at least one vertical rear insertion hole **(43),** and at least one flexible connecting member **(45)** for securing the straps **(2)** of said at least one fastener to said at least one support arm **(4),** said at least one flexible connecting member **(45)** each having a rear end respectively slidably coupled to said at least one vertical sliding track **(44)** and a front end respectively inserted through said at least one vertical rear insertion hole **(43)** and then said at least one horizontal front insertion hole **(42)** of said at least one support arm **(4),** and a hook **(451)** at said rear end for hooking on the rim **(51)** of a vehicle rearview mirror **(5).**

13. The auxiliary rearview mirror mounting arrangement as claimed in claim 1, wherein said auxiliary rearview mirror **(3)** further comprises at least one holder block **(46)** respectively coupled to said at least one support arm **(4)** for receiving the connecting members **(C)** of said at least one fastener.

14. The auxiliary rearview mirror mounting arrangement as claimed in claim 13, wherein said at least one holder block **(46)** each has a toothed portion **(47)** detachably engaged to a respective toothed portion **(47)** at said at least one support arm **(4)** and locked thereto with a respective lock screw **(7).**

15. The auxiliary rearview mirror mounting arrangement as claimed in claim 14, wherein said at least one holder block **(46)** each has an elongated sliding slot **(461)** for the mounting of said lock screw **(7);** said at least one support arm **(4)** each has a screw hole **(48)** for receiving said lock screw **(7).**

16. The auxiliary rearview mirror mounting arrangement as claimed in claim 13, wherein said at least one holder block **(46)** each comprises at least one horizontal front insertion hole **(42),** at least one vertical rear insertion hole **(43)** corresponding to said at least one horizontal front insertion holes **(42),** at least one vertical sliding track **(44)** respectively upwardly disposed adjacent to said at least one vertical rear insertion hole **(43),** and at least one flexible connecting member **(45)** for securing the straps **(2)** of said at least one fastener to said at least one support arm **(4),** said at least one flexible connecting member **(45)** each having a rear end respectively slidably coupled to said at least one vertical sliding track **(44)** and a front end respectively inserted through said at least one vertical rear insertion hole **(43)** and then said at least one horizontal front insertion hole **(42)** of said at least one support arm **(4),** and a hook **(451)** at said rear end for hooking on the rim **(51)** of a vehicle rearview mirror **(5).**

## Patentansprüche

1. Eine Montageanordnung eines Hilfsrückspiegels mit einem Hilfsrückspiegel (3), wobei der besagte Hilfsrückspiegel (3) mindestens einen Tragarm (4) und mindestens ein Befestigungsmittel umfasst, um den besagten Hilfsrückspiegel (3) an einem Fahrzeugrückspiegel (5) zu befestigen, wobei das besagte mindestens eine Befestigungsmittel folgendes umfasst:
- ein erstes Band (2), wobei besagtes erstes Band (2) ein erstes Ende und ein zweites Ende aufweist und mit einer Vielzahl von quer verlaufenden Zähnen (21) versehen ist, die der Länge entlang daran und schräg in einer Richtung angeordnet sind;
- ein zweites Band (2), wobei das besagte zweite Band (2) ein erstes Ende und ein zweites Ende umfasst;
- ein erstes Verbindungsglied (C) und ein zweites Verbindungsglied (C), die jeweils an dem ersten Ende von dem besagten ersten Band (2) und dem ersten Ende von dem besagten zweiten Band (2) vorgesehen sind, um das besagte erste Band (2) und das besagte zweite Band (2) an den besagten mindestens einen Tragarm (4) von dem besagten Hilfsrückspiegel (3) sicher zu befestigen; und
- ein gleitbarer Spannbügel (1), der mit dem zweiten Ende von dem besagten zweiten Band (2) verbunden ist und justierbar am zweiten Ende von dem besagten ersten Band (2) eingespannt ist, um das zweite Ende von dem besagten ersten Band (2) und das zweite Ende von dem besagten zweiten Band (2) zu verbinden, **gekennzeichnet dadurch, dass** der gleitbare Spannbügel (1) von jedem der besagten Befestigungsmitteln einen Basisrahmen (12) umfasst, der zwei vorderseitige Laschen (121) und zwei rückwärtige Laschen (122) aufweist, die an beiden Seiten angeordnet sind, einen Betätigungsblock (13), der drehbar zwischen den besagten vorderseitigen Laschen (121) verbunden ist, und der ein vorderseitiges Stossende (131) aufweist, um die quer verlaufenden Zähne (21) von dem ersten Band (2) nach Einführung des zweiten Endes von dem besagten ersten Band (2) weiter in den besagten gleitbaren Spannbügel (1) hineinzuschieben, einen Einrastblock (14), der drehbar zwischen den besagten rückwärtigen Laschen (122) verbunden ist, um die quer verlaufenden Zähne (21) von dem besagten Band (2) einzurasten, um das besagte erste Band (2) zum besagten gleitbaren Spannbügel (1) zu sperren, und zwei Torsionsfedern (17), die entsprechend zwischen dem besagten Basisrahmen (12) und dem besagten Betätigungsblock (13) und zwischen dem besagten Basisrahmen (12) und dem besagten Einrastblock (14) verkoppelt sind, um dem besagten Betätigungsblock (13) bzw. dem besagten Einrastblock (14) eine Vorspannungskraft zu übertragen.

2. Die Montageanordnung des Hilfsrückspiegels nach Anspruch 1, wobei die besagten Verbindungsglieder (C) von besagtem mindestens einen Befestigungsmittel Haken (C1) sind.

3. Die Montageanordnung des Hilfsrückspiegels nach Anspruch 1, wobei die besagten Verbindungsglieder (C) von besagtem mindestens einen Befestigungsmittel Hakenlöcher (C2) sind.

4. Die Montageanordnung des Hilfsrückspiegels nach Anspruch 2, wobei der besagte mindestens eine Tragarm (4) von dem besagten Hilfsrückspiegel (3) je eine Vielzahl von Hakenlöchern (D1) aufweist, für die Verbindung der Haken (C1) von den besagten Verbindungsgliedern (C) von dem besagten mindestens einen Befestigungsmittel.

5. Die Montageanordnung des Hilfsrückspiegels nach Anspruch 3, wobei der mindestens eine Tragarm (4) von dem besagten Hilfsrückspiegel (3) je eine Vielzahl von Haken (D2) aufweist für die Verbindung der Hakenlöcher (C2) von den besagten Verbindungsgliedern (C) des besagten mindestens einen Befestigungsmittels.

6. Die Montageanordnung des Hilfsrückspiegels nach Anspruch 1, wobei der besagte gleitbare Spannbügel (1) desweiteren eine Abdeckung (15) umfasst, die zu den besagten vorderseitigen Laschen (121) gedreht ist zum Abdecken des besagten Einrastblocks (14).

7. Die Montageanordnung des Hilfsrückspiegels nach Anspruch 1, wobei der besagte gleitbare Spannbügel (1) desweiteren einen Pufferblock (16) umfasst, der an einer Unterseite des besagten Basisrahmens (12) befestigt ist.

8. Die Montageanordnung des Hilfsrückspiegels nach Anspruch 1, wobei das besagte erste Band (2) aus technischem Kunststoff und besagtes zweites Band (2) aus Gummi geformt ist.

9. Die Montageanordnung des Hilfsrückspiegels nach Anspruch 8, wobei der besagte gleitbare Spannbügel (1) einen Anschlagring (11) umfasst, besagtes erstes Band (2) und besagtes zweites Band (2) aus technischen Kunststoffen geformt sind, das zweite Ende des besagten zweiten Bandes (2) durch den Anschlagring (11) des besagten gleitbaren Spannbügels (1) eingeführt ist und in ein flexibles Endstück (22) endet, das an einer Seite des besagten Anschlagrings (11) gestoppt ist.

10. Die Montageanordnung des Hilfsrückspiegels nach Anspruch 9, wobei das besagte erste Band (2) und das besagte zweite Band (2) je eine Vielzahl von quer verlaufenden Zähnen umfassen, die an deren Länge (21) entlang und schräg in einer Richtung angeordnet sind, wobei das besagte zweite Band (2) ein Gleitstück (25) aufweist, das mit dem ersten Ende desselben verbunden ist, wobei das besagte Gleitstück (25) mit einem federnd gelagerten Sperrhebel (251) versehen ist, um die quer verlaufenden Zähne (21) einzurasten, um das Gleitstück (25) mit dem entsprechenden Band (2) an der gewünschten Stelle zu verriegeln, wobei das besagte zweite Verbindungsglied (C) an dem besagten Gleitstück (25) ausgebildet ist.

11. Die Montageanordnung des Hilfsrückspiegels nach Anspruch 1, wobei der besagte mindestens eine Tragarm (4) von dem besagten Hilfsrückspiegel (3) jeweils mindestens eine L-förmige Hakenlasche (41) umfasst.

12. Die Montageanordnung des Hilfsrückspiegels nach Anspruch 1, wobei der besagte mindestens eine Tragarm (4) von dem besagten Hilfsrückspiegel (3) jeweils mindestens ein waagerechtes vorderseitiges Einführungsloch (42) und mindestens ein senkrechtes rückwärtiges Einführungsloch (43) umfasst, die den besagten mindestens einem waagrechten vorderseitigen Einführungslöchern (42) entsprechen, wobei mindestens eine senkrechte Gleitspur (44) nach oben hin und angrenzend an das besagte mindestens eine senkrechte rückwärtige Einführungsloch (43) angeordnet ist, und mindestens ein flexibles Verbindungsglied (45), um die Bänder (2) von besagtem mindestens einen Befestigungsmittel mit besagtem mindestens einen Tragarm (4) sicher zu befestigen, wobei das besagte mindestens eine flexible Verbindungsglied (45) je ein hinteres Ende aufweist, das entsprechend gleitbar mit der besagten mindestens einen senkrechten Gleitspur (44) verbunden ist und ein entsprechendes vorderes Ende, das durch das besagte mindestens eine senkrechte rückwärtige Einführungsloch (43) eingeführt ist, und dann das besagte mindestens eine waagrechte vorderseitige Einführungsloch (42) des besagten mindestens einen Tragarms (4), und ein Haken (451) an dem besagten hinteren Ende zum Einhaken an der Randzone (51) eines Fahrzeug-Rückspiegels (5).

13. Die Montageanordnung des Hilfsrückspiegels nach Anspruch 1, wobei der besagte Hilfsrückspiegel (3) desweiteren mindestens ein Halterungsblock (46) umfasst, der mit dem besagten mindestens einen Tragarm (4) verbunden ist, zur Aufnahme der 15 Verbindungsglieder (C) des besagten mindestens einen Befestigungsmittels.

14. Die Montageanordnung des Hilfsrückspiegels nach Anspruch 13, wobei der besagte mindestens eine Halterungsblock (46) jeweils ein gezahntes Teil (47) aufweist, das lösbar an einem entsprechenden gezahnten Teil (47) an den besagten mindestens einen Tragarm 20 (4) befestigt ist und damit mit einer entsprechenden Sperrschraube (7) verriegelt ist.

15. Die Montageanordnung des Hilfsrückspiegels nach Anspruch 14, wobei der besagte mindestens eine Halterungsblock (46) je einen verlängerten Gleitschlitz (461) aufweist für die Montage der besagten Sperrschraube (7), wobei der besagte mindestens eine Tragarm (4) je ein Schraubenloch (48) aufweist zur Aufnahme der besagten Sperrschraube (7).

16. Die Montageanordnung des Hilfsrückspiegels nach Anspruch 13, wobei der besagte mindestens eine Halterungsblock (46) jeweils mindestens ein waagerechtes vorderseitiges Einführungsloch (42) und mindestens ein senkrechtes rückwärtiges Einführungsloch (43) umfasst, die den besagten mindestens einen waagerechten vorderseitigen Einführungslöchern (42) entsprechen, mindestens eine senkrechte, entsprechend nach oben hin angeordnete Gleitspur (44), die an das besagte mindestens eine senkrechte rückwärtige Einführungsloch (43) angrenzt, und mindestens ein flexibles Verbindungsglied (45), um die Bänder (2) des besagten mindestens einen Befestigungsmittel mit besagtem mindestens einen Tragarm (4) sicher zu befestigen, wobei das besagte mindestens eine flexible Verbindungsglied (45) je ein hinteres Ende aufweist, das entsprechend gleitend mit der besagten mindestens einen senkrechten Gleitspur (44) verbunden ist, und ein vorderes Ende aufweist, das entsprechend durch das besagte mindestens eine senkrechte rückwärtige Einführungsloch (43) eingeführt ist, und dann das besagte mindestens eine waagrechte vorderseitige Einführungsloch (42) des besagten mindestens einen Tragarms (4), und ein Haken (451) an dem besagten hinteren Ende zum Einhaken an der Randzone (51) eines Fahrzeugrückspiegels (5).

## Revendications

1. Dispositif de support pour rétroviseur auxiliaire comportant un rétroviseur auxiliaire (3), ledit rétroviseur auxiliaire (3) comportant au moins un bras de support (4), au moins une fixation pour fixer ledit rétroviseur auxiliaire (3) à un rétroviseur de véhicule (5), dans lequel cet au moins un dispositif de fixation se compose à chaque fois des éléments suivants :
. une première bride de fixation (2), ladite première bride de fixation (2) présentant une première extrémité et une seconde extrémité, et une pluralité de dents transversales (21) réparties sur la longueur de celle-ci et inclinées dans un sens ;
. une seconde bride de fixation (2), ladite seconde bride de fixation (2) présentant une première extrémité et une seconde extrémité ;
. un premier élément de raccordement (C) et un second élément de raccordement (C) respectivement prévus au niveau de la première extrémité de ladite première bride de fixation (2) et au niveau de la première extrémité de ladite seconde bride de fixation (2) pour fixer la première bride de fixation (2) et la seconde bride de fixation (2) audit au moins un bras de support (4) dudit rétroviseur auxiliaire (3) ; et
. une agrafe de blocage coulissante (1) associée à la seconde extrémité de ladite seconde bride de fixation (2) et bloquée en position de manière ajustable sur la seconde extrémité de ladite première bride de fixation (2) pour joindre la seconde extrémité de ladite première bride de fixation (2) et la seconde extrémité de ladite seconde bride de fixation (2),
**caractérisé en ce que** ladite agrafe coulissante de blocage (1) de chaque dispositif de fixation comporte un support de base (12), qui présente deux languettes avant (121) et deux languettes arrière (122) disposées des deux côtés, un bloc d'actionnement (13), qui est monté à pivotement entre lesdites languettes avant (121) et présente une extrémité avant de poussée (131) pour pousser les dents transversales (21) de la première bride de fixation (2) vers l'avant lors de l'introduction de la seconde extrémité de ladite première bride de fixation (2) dans ladite agrafe de blocage coulissante (1), un bloc d'encliquetage (14) monté à pivotement entre lesdites languettes arrière (122) pour engager les dents transversales (21) de ladite bride de fixation (2) afin de verrouiller ladite première bride de fixation (2) avec ladite agrafe coulissante de blocage (1), et deux ressorts de torsion (17) respectivement associés entre ledit support de base (12) et ledit bloc d'actionnement (13) et entre ledit support de base (12) et ledit bloc d'encliquetage (14) pour respectivement exercer une force de rappel sur ledit bloc d'actionnement (13) et sur ledit bloc d'encliquetage (14).

2. Dispositif de support pour rétroviseur auxiliaire selon la revendication 1, dans lequel lesdits éléments de raccordement (C) dudit au moins un dispositif de fixation sont des crochets (C1).

3. Dispositif de support pour rétroviseur auxiliaire selon la revendication 1, dans lequel lesdits éléments de raccordement (C) dudit au moins un dispositif de fixation sont des encoches (C2).

4. Dispositif de support pour rétroviseur auxiliaire selon la revendication 2, dans lequel ledit au moins un bras de support (4) dudit rétroviseur auxiliaire (3) présente chacun une pluralité de trous pour crochet (D1) pour le raccordement des crochets (C1) desdits éléments de raccordement (C) dudit au moins un dispositif de fixation.

5. Dispositif de support pour rétroviseur auxiliaire selon la revendication 3, dans lequel ledit au moins un bras de support (4) dudit rétroviseur auxiliaire (3) présente chacun une pluralité de crochets (D2) pour le raccordement des trous pour crochet (C2) desdits éléments de raccordement (C) dudit au moins un dispositif de fixation.

6. Dispositif de support pour rétroviseur auxiliaire selon la revendication 1, dans lequel ladite agrafe coulissante de blocage (1) comporte en outre un couvercle (15) pivoté sur lesdites languettes avant (121) pour recouvrir ledit bloc d'encliquetage (14).

7. Dispositif de support pour rétroviseur auxiliaire selon la revendication 1, dans lequel ladite agrafe coulissante de blocage (1) comporte en outre un bloc de butée (16) attaché sur la face inférieure dudit support de base (12).

8. Dispositif de support pour rétroviseur auxiliaire selon la revendication 1, dans lequel ladite première bride de fixation (2) est moulée en plastique technique et la seconde bride de fixation (2) est moulée en caoutchouc.

9. Dispositif de support pour rétroviseur auxiliaire selon la revendication 8, dans lequel ladite agrafe coulissante de blocage (1) comporte un anneau de positionnement (11) ; ladite première bride de fixation (2) et ladite seconde bride de fixation (2) étant respectivement moulées en plastique technique ; la seconde extrémité de ladite seconde bride de fixation (2) étant passée dans l'anneau de positionnement (11) de ladite agrafe coulissante de blocage (1) et se terminant par une pièce d'extrémité flexible (22) qui s'arrête au niveau d'une face dudit anneau de positionnement (11).

10. Dispositif de support pour rétroviseur auxiliaire selon la revendication 9, dans lequel ladite première bride de fixation (2) et ladite seconde bride de fixation (2) présentent chacune une pluralité des dents transversales (21) réparties sur la longueur de celles-ci et inclinées dans un sens ; ladite seconde bride de fixation (2) présentant une glissière (25) associée à la première extrémité de celle-ci, ladite glissière (25) comprenant un levier de blocage monté sur ressort (251) pour engager les dents transversales (21) afin de verrouiller la glissière (25) sur la bride de fixation respective (2) à l'emplacement désiré ; ledit second élément de raccordement (C) étant conformé sur ladite glissière (25).

11. Dispositif de support pour rétroviseur auxiliaire selon la revendication 1, dans lequel ledit au moins un bras de support (4) dudit rétroviseur auxiliaire (3) comporte chacun au moins une languette de fixation conformée en L (41).

12. Dispositif de support pour rétroviseur auxiliaire selon la revendication 1, dans lequel ledit au moins un bras de support (4) dudit rétroviseur auxiliaire (3) comporte chacun au moins un trou d'insertion horizontale avant (42), au moins un trou d'insertion verticale arrière (43) correspondant audit au moins un trou d'insertion horizontale avant (42), au moins une glissière verticale (44) respectivement disposée vers le haut et adjacente audit au moins un trou d'insertion verticale arrière (43), et au moins un élément de raccordement flexible (45) pour fixer les brides de fixation (2) dudit au moins un dispositif de fixation audit au moins un bras de support (4), ledit au moins un élément de raccordement flexible (45) présentant chacun une extrémité arrière respectivement associée à coulissement à ladite au moins une glissière verticale (44) et une extrémité avant respectivement introduite à travers ledit au moins un trou d'insertion verticale arrière (43), puis à travers ledit au moins un trou d'insertion horizontale avant (42) dudit au moins un bras de support (4), et un crochet (451) à ladite extrémité arrière pour s'accrocher sur le rebord (51) d'un rétroviseur de véhicule (5).

13. Dispositif de support pour rétroviseur auxiliaire selon la revendication 1, dans lequel ledit rétroviseur auxiliaire (3) comprend en outre au moins un bloc de retenue (46) respectivement associé audit au moins un bras de support (4) pour recevoir les éléments de raccordement (C) dudit au moins un dispositif de fixation.

14. Dispositif de support pour rétroviseur auxiliaire selon la revendication 13, dans lequel ledit au moins un bloc de retenue (46) présente une partie dentée (47) engagée de manière détachable avec une partie dentée respective (47) dudit au moins un bras de support (4) et verrouillé sur celle-ci avec une vis de blocage respective (7).

15. Dispositif de support pour rétroviseur auxiliaire selon la revendication 14, dans lequel ledit au moins un bloc de retenue (46) présente une fente allongée de glissière (461) pour le montage de ladite vis de blocage (7) ; ledit au moins un bras de support (4) présentant chacun un orifice de vissage (48) pour recevoir ladite vis de blocage (7).

16. Dispositif de support pour rétroviseur auxiliaire selon la revendication 13, dans lequel ledit au moins un bloc de retenue (46) présente chacun au moins un orifice d'insertion horizontale avant (42), au moins un orifice d'insertion verticale arrière (43) correspondant audit au moins un orifice d'insertion horizontale avant (42), au moins une glissière verticale (44) respectivement disposée vers le haut et adjacente audit au moins un orifice d'insertion verticale arrière (43), et au moins un élément de raccordement flexible (45) pour fixer les brides de fixation (2) dudit au moins un dispositif de fixation audit au moins un bras de support (4), ledit au moins un élément de raccordement flexible (45) présentant chacun une extrémité arrière respectivement associée à coulissement à ladite au moins une glissière verticale (44) et une extrémité avant respectivement introduite à travers ledit au moins un orifice d'insertion verticale arrière (43) et ensuite à travers ledit au moins un orifice d'insertion horizontale avant (42) dudit au moins un bras de support (4), et un crochet (451) à ladite extrémité arrière pour s'accrocher sur le rebord (51) d'un rétroviseur de véhicule (5).
